Europäisches Patentamt

European Patent Office

Office européen des brevets

(11) Publication number: **0 339 989 B1**

## EUROPEAN PATENT SPECIFICATION

(45) Date of publication of patent specification: **10.08.94**

(21) Application number: **89304195.4**

(22) Date of filing: **27.04.89**

(51) Int. Cl.⁵: **C08L 23/06**, C08L 51/06, C08L 23/20, //(C08L23/06, 23:20),(C08L51/06,23:20)

(54) Compositions comprising a but-1-ene polymer and a low density polyethylene.

(30) Priority: **29.04.88 US 187753**

(43) Date of publication of application:
**02.11.89 Bulletin 89/44**

(45) Publication of the grant of the patent:
**10.08.94 Bulletin 94/32**

(84) Designated Contracting States:
**AT BE CH DE ES FR GB GR IT LI LU NL SE**

(56) References cited:
**EP-A- 300 104**
**GB-A- 2 113 696**
**US-A- 3 817 821**
**US-A- 4 665 130**
**US-A- 4 759 984**

(73) Proprietor: **SHELL OIL COMPANY**
**900, Louisiana Street**
**Houston Texas 77002(US)**

(72) Inventor: **Hwo, Charles C.**
**2710 Sugarwood Drive**
**Sugarland Texas 77478(US)**

(74) Representative: **Myerscough, Philip Boyd et al**
**J.A.KEMP & CO.**
**14, South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to compositions which can be used to provide a peelable seal.

A peelable seal is defined as the seal or joint between two films or sheets produced by heat sealing or impulse sealing which has the property that it can be opened in the original plane of joining the two films or sheets by the action of a pulling force, without wrenching off or tearing occurring in the material of the two films or sheets used to make up the joint. The seal is achievable either between two films or sheets, or between one film or sheet and a substrate. Depending on which substrate is used, an additional tie layer adhesive may or may not be needed between the film or sheet and the substrate. For the purposes of the present invention, the peelable seal must possess a mechanical resistance sufficient to maintain the integrity and the tight-seal properties of a packing or wrapping during storage and transport of a packed or wrapped article until such time as the packing or wrapping is opened by the user of the article. The mechanical resistance of the peelable seal must, however, be low enough to permit ready manual opening of the joint, i.e. without the use of any auxiliary instrument.

References in the prior art to thermoplastic materials which have been employed in the manufacture of films capable of forming peelable seals include US-A-4,189,519 which discloses a blend for producing a peelable heat seal comprising (1) about 50 to 90 percent by weight of a copolymer of about 80 to 96 percent by weight ethylene and about 4 to 20 percent by weight of an ethylenically unsaturated ester, and (2) about 10 to 50 percent by weight of a crystalline isotactic polybutylene.

Further references include US-A-3,900,534 which generally discloses thermoplastic shrink films with good heat seal characteristics and good optical properties, but does not address the need for a peel seal film; US-A-3,817,821, which discloses poly(ethylene/vinylacetate) blends (EVA) with polybutylene at 20-40 weight percent; US-A-3,879,492 which discloses blends of polybutylene + styrene-butadiene copolymer + low density polyethylene (LDPE) + high density polyethylene (HDPE) + polyisobutylene; US-A-4,539,263 which discloses peel seals based on blends of propylene copolymers; and US-A-4,665,130 and 4,666,778 which disclose blends of polybutylene + EVA (or polyethylene) + polypropylene with polypropylene being less than 15 weight percent in the blend.

US-A-4,359,544 describes a method for promoting crystallization of various homopolymers and copolymers of but-1-ene wherein the copolymers contain no more than 15 mole% ethylene, which method comprises adding to a composition comprising the but-1-ene homopolymer or copolymer from 0.02 to 5% by weight of stearamide and from about 0.02 to 5% by weight of high density polyethylene.

US-A-4,440,899 describes a polyolefin composition comprising an intimate mixture of 20 to 99.5% by weight of a first, stabilized, polyolefin powder and from about 0.5% to about 80% by weight of a second, at most slightly stabilized, polyolefin powder. The second powder has a crystalline melt point at least one degree higher than that of the first powder and the second powder has the ability to be oxidized under process conditions. In particular, a polyethylene composition is disclosed throughout the examples which generally has a density of 938 kg m$^{-3}$.

US-A-4,489,034 describes a process using crystalline polymer sheets prepared by the peroxide reaction of a mixture of an alpha olefin polymer selected from polypropylene and polybutylene with a polyethylene. In particular, this patent claims a product obtained by contacting a mixture of from 95 to 65% by weight of a mixture of from about 50 to 96% by weight of crystalline isotactic alpha olefin polymer selected from the group consisting of polypropylene and polybutylene and about 50 to 4% by weight of a polyethylene; 5 to 35% by weight of an impact modifier; and an effective amount of 1,2-polybutadiene cross-linking efficiency improver.

US-A-4,657,982 describes blends and films made from 80 to 99% of a polyethylene, 0.5 to 10% of a polybutene having a number average molecular weight of from 500 to 1500, and 0.5 to 10% by weight of a polybutene having a number average molecular weight of from 1700 to 10,000.

US-A-3,733,373 claims a blend comprising from about 70 to 99.9% by weight of a substantially crystallizable polymer of but-1-ene selected from homopolymers of but-1 ene and copolymers of but-1-ene with a polymerizable, dissimilar $C_2$-$C_{12}$ olefin, the $C_2$-$C_{12}$ being present in the copolymer at a concentration of up to 20% by weight; and from 0.1 to 30% by weight of a polymer of ethylene which is a homopolymer of ethylene or a copolymer of ethylene with a higher alpha-olefin, the higher alpha-olefin being present in the copolymer in a concentration of up to about 10% by weight and the ethylene having a density of at least 930 kg m$^{-3}$.

It has long been desired to develop new compositions for film, sheets and laminar structures suitable for use as wrapping or packaging materials, which have easy peelability at the seal and yet which will bond to polypropylene without the aid of an adhesive. Furthermore, such compositions should be able to bond to other substrates with the use of a tie layer adhesive having a clean sealing surface with few angel hairs

2

contained therein upon opening of a sealed area.

It has now been found that certain properties, including film peel seal characteristics, of wrapping films or sheets may be improved by fabricating films or sheets from blends of high molecular weight homopolymers or copolymers of but-1-ene and low density polyethylene (either modified of non-modified). The amount of angel hair on the peel surface of such films or sheets is minimised and an essentially clean peel surface is therefore achieved. Such films or sheets are suitably bonded to a substrate, such as nylon or aluminum foil, by coextrusion or extrusion lamination. Although reference is made herein predominantly to films, sheets may be formed as well. It is possible to dispose laminated or coextruded blends on further substrates, such as high density polyethylene or polypropylene.

Accordingly, the present invention provides a laminate comprising a film or a sheet disposed on a substrate, the film or sheet being optionally biaxially orientated and Comprising a composition which comprises, as sole polymeric components, (i) from 8 to 49 % by weight of a homopolymer or copolymer of but-1-ene having an average molecular weight of at least 500,000 and (ii) from 92 to 51 % by weight of a modified or non-modified low density polyethylene having a density of 930 kg m$^{-3}$ or less. More typically, the composition comprises from 90 to 70% by weight of the modified or non-modified low density polyethylene, and from 10 to 30% by weight of the homopolymer or copolymer of but-1-ene. A preferred embodiment of the composition comprises from 75 to 85% by weight of the modified or non-modified low density polyethylene and from 15 to 25% by weight of the high molecular weight homopolymer or copolymer of but-1-ene.

The composition may be formed into a wrappable film which is capable of forming peel seals. Accordingly, a film or sheet is provided comprising a composition in accordance with the invention.

Typically the film comprises from 10 to 30% by weight of the but-1-ene homopolymer or copolymer, and from 90 to 70% by weight of the modified or non-modified low density polyethylene. In a preferred embodiment the film comprises from 25 to 15% by weight of the but-1-ene homopolymer or copolymer and from 75 to 85% by weight of the modified or non-modified low density polyethylene.

The term but-1-ene homopolymer or copolymer refers to a polymer comprising at least 90%, preferably at least 97%, in particular at least 98% by weight, of isotactic polymer. Isotactic but-1-ene homopolymers or copolymers which are suitable for use have a weight average molecular weight of at least 500,000, in particular from 750,000 to 1,750,000 as determined by gel permeation chromatography. Suitable but-1-ene homopolymers and copolymers typically have a density of from 900 to 919 kg m$^3$, for example 916 to 919 kg m$^{-3}$, in particular from 917 to 919 kg m$^{-3}$ and a melt index of from 0.1 to 2. But-1-ene polymers having melt indices of from 0.40 to 2 are particularly suitable. Melt indices are determined by ASTM D1238, Condition E.

But-1-ene homopolymers and copolymers are suitably obtained by the Ziegler-Natta low pressure polymerization of but-1-ene, for example by polymerizing but-1-ene with catalysts of $TiCl_3$ or $TiCl_3/AlCl_3$ or $Al(C_2H_5)_2Cl$ at temperatures of from 10° to 50°C, preferably from 20 to 40°C. An example of this process is disclosed in DE-A-1,570,353. The polymer thus produced is suitably subjected to further processing in accordance with conventional methods, for example as disclosed in DE-A-1,292,379 and DE-A-1,570,337.

The but-1-ene homopolymer or copolymer may be combined with a small amount of stabilizer, such as "Irganox" 1010. Typical commercially available but-1-ene homopolymers or copolymers suitable for use in the present invention include those available from Shell Chemical Company of Houston, Texas, and known as DP 1560, DP 1520, and DP 0110.

The low density polyethylene (known as LDPE) employed in the novel formulations typically has a density of 930 kg m$^{-3}$ or less, and in particular 920 kg m$^{-3}$ or less. In certain embodiments the LDPE has a density of 910 kg m$^{-3}$ or less. Typically the LDPE has a melt index of from $1.6 \times 10^{-4}$ to 0.1166 g/s (0.1 to 70 g/10 minutes) as measured by ASTM D1238, Condition E. A particularly suitable LDPE has, for example, a melt index of $8.33 \times 10^{-4}$ g/s (0.5 g/10 min), and a density of 920 kg m$^{-3}$. Examples of suitable LDPE include "Chevron" PE 1017 which has a density of 917 kg m$^{-3}$ available from Chevron Chemical Company, and "Chevron" PE 4517 with a density of 923 kg m$^{-3}$.

An LDPE having a viscosity at mixing temperatures approaching that of the but-1-ene homopolymer or copolymer facilitates mixing of the components. A wide variety of suitable LDPE's are commercially available and methods for their preparation are well known in the art.

The low density polyethylene used in the invention is either modified or non-modified. If it is modified it is typically a polyethylene functionalised by from 0.1 to 5% by weight of maleic anhydride.

It is possible to include various additives such as mold release agents, conventional fillers, thermo- and ultraviolet stabilizers, processing agent, slip agents, anti-block agents, pigments and/or other additives into the compositions of the invention. These are included before the polymers are blended together, during the blending process or even after the primary polymers are blended together. The particular choice of additive will depend in part upon the contemplated end-use of the composition.

The method of combining the but-1-ene homo- or copolymer and the low density polyethylene is generally not critical unless it affects the properties of the resultant formulation. Melt compounding or dry tumbling the blend is a typical method for blending the components.

For commercial utility, it is desirable to use the least amount of energy to combine the components into an effective blend. For example, the but-1-ene polymers in a masterbatch are added to low density polyethylene using an intensive mixing device such as a twin-screw extruder, the low density polyethylene being incorporated into the but-1-ene polymers by passing the polyethylene through an extruder coupled with a side-arm extruder through which the masterbatch is added. An alternative method is to employ an extruder provided with two side-arm extruders; the low density polyethylene and the stabilizer or other additives are injected into the first side-arm and the but-1-ene polymers are injected through the second side-arm extruder. Other intensive mixing devices such as Banbury mixers may be employed to make the masterbatch.

The films are suitably disposed on a substrate to form a laminate. After blending, the novel polymer compositions may be formed into a biaxially oriented or unoriented film or sheet by casting a film or using the film blowing method.

Accordingly, the present invention provides a laminate comprising a film or sheet as hereinbefore described disposed on a substrate. Typically the substrate comprises a polyamide or aluminum foil. The polyamide is generally nylon. The laminate is produced by a process which comprises bonding the film or sheet to the substrate by extrusion lamination or coextrusion. In coextrusion, the blend is coextruded with the substrate. The laminate thus produced is capable of forming peel seals. If a material other than a polyamide or aluminum foil is used as the substrate in the laminate, a tie layer adhesive may be required. Such an adhesive is disposed between the film or sheet and the substrate, thereby bonding the former to the latter. Suitable adhesives include, for example, modified low density polyethylene.

After fabrication of the laminate by disposing the film or sheet on a substrate the film or sheet can be heat sealed either to itself, blend side to blend side, or to a second substrate by sealing jaws at a preset temperature, pressure and dwell. The second substrate is, for example, high density polyethylene or polypropylene. The seal strength is tested by an Instron tensile tester at 0.423 cm/s (10"/min) crosshead speed. Maximum strength on a 25.4 cm (1 inch) width strip was designated as peel seal strength.

A laminate can be made by making two separate films or sheets and then laminating them together. Such a laminate may be prepared from two films which were prefabricated either by film blowing (melt extrusion with a circular die) or by the casting method (a flat die-melt extrusion process).

Melt extrusion with a flat die (casting) may be accomplished for thermoplastic polymers by using a flat die or slot die. The extrusion process starts with a polymer in a form that can be fed continuously into an extruder by means of a screw or pneumatic tube. Sometimes the polymers are combined with additive materials such as plasticizers, lubricants, stabilizers and colorants by means of Banbury mixers. The resulting mix is extruded through rod shaped dies and chopped into pellets. Pelletized polymer is fed into a screw conveyer into the end of a screw-type extruder and is heated and made into viscous fluid in a cylinder by means of a revolving, helical screw. The material emitting from the die is quenched on a temperature controlled chill roll. Finished materials or sheets may suitably be subjected to either one-way or two-way (biaxial) stretching using continuous tenter-frame operations in biaxial orientation.

The laminate is optionally adhered to a second substrate, such as high density polyethylene or polypropylene, as referred to above.

The following Examples further illustrate the invention.

EXAMPLE 1

15% by weight of Polybutylene PB0110 having a melt index of about $6.66 \times 10^{-3}$ g/s (0.4 dg/min) (ASTM method D-1238 condition "E") and a density of about 915 kg m$^{-3}$ was dry blended in a tumbler mixture with 85% by weight of low density polyethylene PE 4517 available from Chevron. The resultant blend was coextrusion coated onto a 30 $\mu$m thick aluminum foil, available from Reynolds Metals using USI Chemical N.A. 211 low density polyethylene with a density of 924 kg m$^{-3}$ and a melt index (MI) of 4.5 as the tie layer adhesive. A die temperature of about 315.5°C (600°F) was used to dispose the film of several mils (1 mil = 25.4 $\mu$m) in thickness onto a 500 $\mu$m thick substrate using a flat die. The foil structure was then sealed onto a second substrate with a cup sealer. For this example, the second substrate was a high density polyethylene sheet of Dupont "Alathon" 7815.

The peel strength of the resulting structure was tested. The extruded film as disposed on the second substrate was sealed together in film to film contact. The second substrate was not heated during sealing.

4

275.8 kPa (40 pounds per square inch) of pressure and a dwell time of about 0.5 seconds were used for sealing. The resulting sealed structure was Al foil/LDPE/(LDPE + PB0110) on the second substrate with layer thicknesses of 30 $\mu$m, 27 $\mu$m and 46 $\mu$m respectively for the film layers. After the film was cooled, 25.4 mm (one inch) wide strips were cut from the film at locations across its width for testing of their seal strengths. Physical properties are given in Table 1 which follows.

EXAMPLE 2

Example 1 was repeated using 20% by weight of PB0110 and 80% by weight of LDPE. The results appear in Table 1 which follows.

EXAMPLE 3

Example 1 was repeated using 25% by weight of PB0110 and 75% by weight of LDPE. The results appear in Table 1 which follows.

EXAMPLE 4

Example 1 was repeated using 15% by weight of PB0110 and 85% by weight of LDPE except that the second substrate was changed from the high density polyethylene of Examples 1-3 to a polypropylene sheet, Shell 5384 available from Shell Chemical Company of Houston, Texas. The results appear in Table 1 which follows.

EXAMPLE 5

Example 4 was repeated using 20% by weight of PB0110 and 80% by weight of LDPE. The results appear in Table 1 which follows.

EXAMPLE 6

Example 4 was repeated using 25% by weight of PB0110 and 75% by weight of LDPE. The results appear in Table 1 which follows.

TABLE 1

| Example N°: | 1 | 2 | 3 | 4 | 5 | 6 |
|---|---|---|---|---|---|---|
| Seal Coat Blend Composition on a first substrate of aluminum foil | | | | | | |
| FBO110, % by weight: | 15 | 20 | 25 | 15 | 20 | 25 |
| LDPE, a) % by weight: | 85 | 80 | 75 | 85 | 80 | 75 |
| Second Substrate b) | HDPE | HDPE | HDPE | Polypropylene | Polypropylene | Polypropylene |
| Seal Strength, kg/2.54 cm (lb/in) c) | | | | | | |
| At (360 F) 182 C | 1.34 (2.95) | 1.29 (2.85) | 1.07 (2.35) | – | – | – |
| (380 F) 193 C | 3.18 (7.02) | 2.80 (6.19) | 1.27 (2.80) | – | – | – |
| (400 F) 204 C | 3.66 (8.07) | 3.52 (7.77) | 1.92 (4.23) | 1.43 (3.16) | 1.82 (4.02) | 1.91 (4.21) |
| (420 F) 216 C | 4.00 (8.82) | 3.56 (7.85) | 2.14 (4.71) | 1.39 (3.06) | 1.84 (4.06) | 2.02 (4.45) |
| (440 F) 227 C | 4.55 (10.03) | 3.79 (8.36) | 2.25 (4.95) | 1.56 (3.44) | 1.94 (4.27) | 2.13 (4.69) |
| (460 F) 238 C | – | – | – | 1.98 (4.36) | 2.22 (4.89) | 2.08 (4.59) |

(a) Low Density PE: 4.5 MI
(b) Second Substrate Thickness: 500 µm
(c) As tested by an Instron Tensile Tester, ASTM D-882

**Claims**

1. A laminate comprising a film or a sheet disposed on a substrate, the film or sheet being optionally biaxially orientated and comprising a composition which comprises, as sole polymeric components, (i)

6

from 8 to 49 % by weight of a homopolymer or copolymer of but-1-ene having an average molecular weight of at least 500,000 and (ii) from 92 to 51 % by weight of a modified or non-modified low density polyethylene having a density of 930 kg m$^{-3}$ or less.

2. A laminate according to claim 1 wherein the composition comprises from 15 to 25 % by weight of (i) and from 75 to 85 % by weight of (ii).

3. A laminate according to claim 1 or 2, wherein the said modified low density polyethylene has been functionalized with maleic anhydride.

4. A laminate according to any one of the preceding claims wherein the substrate comprises aluminum foil or a polyamide.

5. A laminate according to any one of the preceding claims which comprises a tie layer adhesive disposed between the said film or sheet and the said substrate.

6. A laminate according to claim 5 wherein the tie layer adhesive comprises modified low density polyethylene.

7. A laminate according to any one of claims 1 to 6 comprising a second substrate which is, for example, high density polyethylene or polypropylene.

8. A process for producing a laminate which comprises bonding a film or sheet to a substrate by extrusion lamination or coextrusion, wherein the said film or sheet comprises, as sole polymeric components:
   (i) from 8 to 49 % by weight of a homopolymer or copolymer of but-1-ene having an average molecular weight of at least 500,000 and
   (ii) from 92 to 51 % by weight of a modified or non-modified low density polyethylene having a density of 930 kg m$^{-3}$ or less.

9. A process according to claim 8 for producing a laminate as claimed in any one of claims 1 to 7.

**Patentansprüche**

1. Laminat, umfassend einen Film oder eine Folie, der/die auf einem Substrat angeordnet ist, wobei der Film oder die Folie gegebenenfalls biaxial orientiert ist, und umfassend eine Masse, die als einzige polymere Komponenten (i) 8 bis 49 Gew.-% eines Homopolymers oder Copolymers von But-1-en mit einem mittleren Molekulargewicht von mindestens 500 000 und (ii) 92 bis 51 Gew.-% eines modifizierten oder nicht modifizierten Polyethylens niedriger Dichte mit einer Dichte von 930 kg•m$^{-3}$ oder darunter umfaßt.

2. Laminat nach Anspruch 1, wobei die Masse 15 bis 25 Gew.-% (i) und 75 bis 85 Gew.-% (ii) enthält.

3. Laminat nach Anspruch 1 oder 2, wobei das modifizierte Polyethylen niedriger Dichte mit Maleinsäureanhydrid funktionalisiert ist.

4. Laminat nach einem der vorangehenden Ansprüche, wobei das Substrat Aluminiumfolie oder ein Polyamid umfaßt.

5. Laminat nach einem der vorangehenden Ansprüche, umfassend eine Bindemittelschicht zwischen dem Film oder der Folie und dem Substrat.

6. Laminat nach Anspruch 5, wobei die Bindemittelschicht modifiziertes Polyethylen geringer Dichte umfaßt.

7. Laminat nach einem der Ansprüche 1 bis 6, umfassend ein zweites Substrat, das z.B. Polyethylen hoher Dichte oder Polypropylen ist.

**8.** Verfahren zur Herstellung eines Laminats, umfassend das Verbinden eines Films oder einer Folie mit einem Substrat durch Extrusionslaminieren oder Coextrudieren, wobei der Film oder die Folie als einzige polymere Komponenten umfaßt:

(i) 8 bis 49 Gew.-% eines Homopolymers oder Copolymers aus But-1-en mit einem mittleren Molekulargewicht von mindestens 500 000 und

(ii) 92 bis 51 Gew.-% eines modifizierten oder nicht modifizierten Polyethylens geringer Dichte mit einer Dichte von 930 kg•m$^{-3}$ oder darunter.

**9.** Verfahren nach Anspruch 8 zur Herstellung eines Laminats nach einem der Ansprüche 1 bis 7.

**Revendications**

**1.** Stratifié comportant un film ou une feuille disposé sur un substrat, le film ou la feuille étant éventuellement orienté biaxialement et comportant une composition qui comprend, en tant que seuls composants polymères,

a) de 8 à 49 % en poids d'un homopolymère ou d'un copolymère du butène-1, dont la masse moléculaire moyenne vaut au moins 500 000, et

b) de 92 à 51 % en poids d'un polyéthylène basse densité, modifié ou non, dont la masse volumique vaut au plus 930 kg/m$^3$.

**2.** Stratifié conforme à la revendication 1, dans lequel la composition comprend de 15 à 25 % en poids du composant (a) et de 75 à 85 % en poids du composant (b).

**3.** Stratifié conforme à la revendication 1 ou 2, dans lequel ledit polyéthylène basse densité modifié a été fonctionnatisé à l'aide d'anhydride maléique.

**4.** Stratifié conforme à l'une des revendications précédentes, dans lequel le substrat comprend une feuille d'aluminium ou un polyamide.

**5.** Stratifié conforme à l'une des revendications précédentes, qui comporte un adhésif formant une couche de liaison, placée entre le substrat et le film ou la feuille.

**6.** Stratifié conforme à la revendication 5, dans lequel l'adhésif de la couche de liaison comprend un polyéthylène basse densité modifié.

**7.** Stratifié conforme à l'une des revendications 1 à 6 et comportant un second substrat qui est par exemple en polyéthylène haute densité ou en polypropylène.

**8.** Procédé de production d'un stratifié, qui comprend le fait de lier un film ou une feuille à un substrat, par extrusion et stratification ou par coextrusion, le film ou la feuille comportant, en tant que seuls composants polymères,

a) de 8 à 49 % en poids d'un homopolymère ou d'un copolymère du butène-1, dont la masse moléculaire moyenne vaut au moins 500 000, et

b) de 92 à 51 % en poids d'un polyéthylène basse densité, modifié ou non, dont la masse volumique vaut au plus 930 kg/m$^3$.

**9.** Procédé conforme à la revendication 8, permettant de produire un stratifié conforme à l'une des revendications 1 à 7.